# EUROPEAN PATENT APPLICATION

(11) **EP 4 830 499 A1**
(43) Date of publication of application: **28.10.2026**
(21) Application number: 25172537.0
(22) Date of filing: 25.04.2025
(51) Int. Cl.: A01B 39/18, A01M 21/02, A01M 21/04

(54) **WEED REMOVAL VEHICLE**

(71) Applicant: Trabotyx B.V., 5222 AV 's-Hertogenbosch (NL)
(72) Inventor: Kreukniet, Tim, 5222 AV 's-Hertogenbosch (NL); Boussama, Mohamed DhiaEddine, 5222 AV 's-Hertogenbosch (NL); Ouellette, Simon, 5222 AV 's-Hertogenbosch (NL); Mohamed, Chebbi, 5222 AV 's-Hertogenbosch (NL)
(74) Representative: De Vries & Metman

(57) **Abstract**

Weed control vehicle, comprising
- an imaging module;
- a laser weeding module,
- a mechanical weeding module, and
- a data processing module in communication with the imaging module to receive image data of a detected weed plant. The data processing module is programmed to determine position data and identification data of the detected weed plant on basis of the image data, and to select the laser weeding module or the mechanical weeding module for weeding the detected weed plant on basis of the position data and/or identification data of the detected weed plant.

## Description

The invention relates to a weed removal vehicle, comprising an imaging module configured to provide image data of a weed plant, a laser weeding module, and a data processing module configured to receive the image data of a weed plant to determine position data and identification data of the weed plant. Such systems enable efficient and sustainable large scale weed control in diverse agricultural and horticultural settings, in particular on agricultural land.

WO2024165111 discloses an example of such a weed removal vehicle, using laser weeding and an imaging module. In these prior art systems the imaging module usually includes a camera for photographically recording a section of the agricultural area. The captured image is then analysed by image recognition software. Identified plants are classified as either useful plants or weeds. If classified as a weed plant, a laser head of the module is aimed at the weed plant, and activated to irradiate it with a high-energy laser beam, resulting in lethal damage preventing re-growth and/or thermal decomposition and elimination of the weed plant.

A drawback of laser weeding is that that the energy required to deliver a lethal dose to a weed is exponentially related to its size, particularly its diameter, height, and stem thickness, species, humidity and soil type. Therefore, laser weeding is particularly efficient for small weeds.

Traditionally, large scale weeding was done by using herbicides. However, such chemical weed control is harmful to health and environment. Mechanical weeding is a cleaner alternative, but disturbs the soil and can damage nearby crops. Soil disturbance promotes weed re-growth and increase of weed densities.

It is an object of the invention to provide sustainable and efficient weed control for a wide range of types and size of weeds, with reduced risk of damaging nearby crops.

The object of the invention is achieved with a weed control vehicle, comprising:
- an imaging module;
- a laser weeding module, and
- a data processing module in communication with the imaging module to receive image data of a detected weed plant, the data processing module being programmed to determine position data and identification data of the detected weed plant on basis of the image data;

wherein the weed control vehicle further comprises a mechanical weeding module;
wherein in a selection step the data processing module is programmed to select the laser weeding module or the mechanical weeding module for weeding the detected weed plant on basis of the position data and/or identification data of the detected weed plant.

This system makes it possible to use laser weed control where possible and only switch to mechanical weed control when specific circumstances require it, e.g., if too much energy is needed to eliminate a detected weed plant or if laser treatment of a detected weed plant would compromise capacity or speed, for example if the weed density (number of weeds per square meter) is above a lower limit.

For example, the data processing module can be programmed to calculate the amount of energy needed by the laser weeding module to eliminate the detected weed plant on basis of the identification data of the detected weed plant. On basis of the calculated amount of energy, the data processing module is programmed to select the laser weeding module if the amount of energy is below an upper limit, or to activate the mechanical weeding module if the amount of energy is above the upper limit.

The amount of energy can be expressed in Joules, or in time needed to irradiate a weed plant given a fixed power or intensity of the used laser beam. For example, the data processing module can be programmed to switch to mechanical weeding if the required time for laser weeding would be above an upper limit, e.g., above 150 ms, e.g., above 200 ms.

In an exemplary embodiment, the data processing module can be programmed to activate the mechanical weeding module if the amount of energy that would be needed by the laser weeding module is above 50 Joule, e.g., above 40 Joules for weed plants having a height of at most 50 mm, or above 20 Joules for weed plants having a height of at most 30 mm.

In a further embodiment, the identification date used for the selection of the laser weeding module or the mechanical weeding module include height, diameter, species and/or stem thickness of the detected weed plant. The data processing module can for example programmed to activate the mechanical weeding module if the length of a detected weed plant is above predefined upper limit, e.g., 50 mm and/or if the distance between the detected weed plant and a closest crop plant is less than a lower limit and/or if the weed growth is such that laser weeding would be less fit , e.g., if weed leaves cover the meristem point.

Optionally, the vehicle can comprise one or more temperature and/or humidity sensors. Alternatively, or additionally, the vehicle may comprise a communication module connected to a network to receive data, e.g., ambient temperature, humidity, past-rain, or plant or soil health data. A combination of both, one or the other would allow generic and fine-grained environmental data to optimize laser exposure times. This information may for example help to determine or estimate water content of a targeted weed plant, which can be used as a control parameter for the laser weeding module.

Imaging data can for example be or comprise three-dimensional imaging data from the imaging module, which can for example be or comprise a stereoscopic camera such as a ZED-X^{®} Mini of Stereolabs, San Francisco, USA. A stereoscopic camera captures multiple RGB images where each camera lens location is known relative to another enabling stereoscopic imaging. Further processing is done through feature identification and disparity matching resulting in a 3D representation in space of the target scene containing crops and weeds, commonly referred to as point clouds. This processing can be done internally inside the camera, or the camera feeds synchronized raw images from its sensors to the data processing module where this information is processed to extract point clouds (i.e., feature matching between the different image sources and building disparity maps from which point-clouds are extracted). This allows for depth estimation and precise localization of plants, facilitating accurate weed detection and treatment planning.

Alternatively, or additionally, the imaging module may for example comprise one or more optical sensors, such as one or more cameras, optionally combined with depth sensors, such as one or more LIDAR sensors, enabling the data processing unit to generate three-dimensional image data for determining position and identification data.

The imaging module can be rigidly attached to a steering unit, such as a galvanometer system, e.g., a 2D mirror galvanometer, ensuring that the field of view remains aligned with the targeting laser head for precise weed elimination.

The imaging module can be mounted in a downward orientation or tilted at an angle to provide better depth perception and visibility in dense vegetation or uneven terrains. This flexible mounting allows the system to operate efficiently with various crop types and environmental conditions.

The data processing module is configured to receive and process data from the imaging module. More particularly, the data processing module is configured to either receive pre-processed three-dimensional image data and/or raw synchronized image feeds from multiple sensors, such as RGB sensors processed by the data processing module to extract the three-dimensional image data.

In a particular embodiment, the data processing module can be configured to process incoming RGB image data through computer vision and machine learning (AI) techniques to identify, localize and classify all plants in the captured scene. Optionally, the data processing module fuses three-dimensional data with algorithmic output to extract a full spatial representation of all objects in the scene and determines relevant characteristics and identification data.

The identification data may for example include geometric data (e.g., diameter, height, volume) and material data relating to properties of the plant, such as heat absorption capacity and heat resistance, life essential parts of the weed plant such as location of growth point or apical meristem, and the like.

The identification data particularly includes information that, e.g., in combination with empirical regressions, helps in inferring the amount of energy needed by the laser weeding module to eliminate the weed plant. For example, it may include height of the weed plant, its diameter, stem thickness and species of the weed. For example, in annual weeds, such as red goosefoot, the apical meristem is easily accessible, making them sensitive to small doses of laser irradiation. In grassy perennials, such as rosette, the apical meristem is usually 1-2 mm below ground in the earliest growth stages, so these plants require a higher dose.

For given specific conditions, such as the used laser light wavelengths or types of weed, parameters for multi-order polynomial equations can be found by systems based on machine learning, in a manner which is well known per se.

In a specific embodiment, the data processing module may for example calculate or directly utilize real-time provided position and attitude update data (egomotion), a technique commonly employed in stereo camera-based setups. These relative positional updates track the camera's movement between frames and are used to predict weed locations within few millimetres accuracy during each laser treatment or mechanical action.

For instance, if a laser must expose a weed for 200 ms, the control unit accounts for platform movement during the exposure window, and uses fused egomotion data (optical flow + IMU) to predict the weed's precise future position relative to the laser weeding module and dynamically adjusts the laser beam to ensure accurate weed targeting, even in dynamic environments. This real-time motion compensation enables higher operational speeds, as the system anticipates movement rather than reacting to it. It also improves weeding precision, reducing errors caused by platform drift, and optimizes system efficiency, allowing seamless adaptation to changing field conditions.

Optionally, the data processing module may comprise auxiliary AI modules along with a primary AI module. This method, also known as "ensemble techniques", is particularly beneficial for early-stage crops, which are often difficult to differentiate from weeds due to their small size and morphological similarities.

Crop specific AI modules can be trained offline and deployed remotely and continuously in the data processing module in an inference software module (inference engine) including detecting and classifying objects as either crops or weeds, generating a bounding box around each detected object and identifying and marking the stem or meristem point of each plant.

After a weed plant is detected and initially processed through the inference engine, it can be further augmented with extra information relevant to downstream processing, information such as colour, spatial, and morphological information, including for example stem diameter, plant height, distance from neighboring crops, and additional features relevant to weed differentiation and treatment decisions.

The data processing module may further comprise a planning module evaluating a detected weed plant and determining the most effective removal method based on the calculated energy required for laser weeding the detected weed plant. Other factors can also be taken into account, including the availability of weeding tools (laser, mechanical, or both), weed size, structure, spatial characteristics, proximity to crops, and the potential risk of collateral damage. The planning module prioritizes and assigns each weed for either laser weeding or mechanical weeding to optimize efficiency, minimize crop risk, and enhance overall system performance. Additionally, the planning module employs an adaptive dispatching strategy that continuously optimizes execution order, balancing travel time, energy consumption, and treatment speed. It can implement hybrid approaches, such as prioritizing laser weeding in delicate areas near crops while assigning mechanical weeding to larger, isolated weeds. These real-time optimization techniques facilitate smarter resource allocation, higher precision, and greater adaptability across various field conditions.

The data processing module also includes a control unit for the laser weeding module and the mechanical weeding module. On basis of the calculated energy required for laser weeding a target weed, the control unit assigns the appropriate weeding method to each target, optimizing for speed, energy efficiency, and minimal crop interference.

The control unit receives the list of targeted weeds and executes the weeding action. The control unit can for example operate in two modes: Single-target processing, where each weed plant is addressed sequentially, or buffered processing, where multiple weeds are queued and executed in a sequenced manner. The choice of mode depends on factors such as driving speed of the vehicle and processing constraints. The control unit can be used to direct the laser beam to the designated weed locations for thermal treatment or engage the mechanical weeding module for assigned weed plants, when applicable.

The system can have one or multiple laser weeding modules, e.g., operating in parallel.

The laser weeding module may for example comprise a laser head, that is moveably mounted so as to be directed to a selected weed plant. The laser head my comprise a laser diode unit for generating a laser beam, and a laser optics unit coupled to the laser diode unit via a light guide for deflecting and focusing the laser beam. The diode unit may for example comprise an array of diodes, e.g., each being configured to deliver up to 7-10 watts.

Optionally, the laser weeding module may have two or more laser heads, e.g., allowing simultaneous weeding of a plurality of weed plants.

The laser beam can for example have a light wavelength (λ) in the range from 400 nm to 650 nm and/or an optical power at least 50 Watts, e.g., at least 100 Watts, e.g., 200 Watts or more and/or a spot size of about 1 - 3 mm, e.g., about 2 mm but can be bigger or smaller if so desired.

The laser source and electronics are actively water-cooled using a chiller system to maintain optimal operating conditions and prevent overheating.

The control unit directs the laser head to target an identified life-essential part for each detected weed plant by controlling the laser optics on the basis of position data of the life-essential plant part. Subsequently, the laser head is activated to generate the laser beam for a predetermined irradiation time to eliminate the targeted weed plant.

The mechanical weeding module may comprise one or more end effectors movable in vertical and lateral directions. Examples of suitable end effectors of the mechanical weed control module include drills, grippers and hoes, e.g., driven in multiple degrees of freedom (e.g., linear or articulated robots).

The one or more mechanical weeding modules function as complementary units. For example, they do not operate with independent computing or camera systems. Instead, networked laser computing units, which continuously communicate and share data, are responsible for coordinating weed removal by identifying and assigning any unaddressed weeds to the mechanical weeding module for final removal.

The system can have one or multiple laser units operating in parallel, combined with one or multiple mechanical units, but the number of each does not have to be equal. For instance, a configuration may include four laser units for high-speed precision weeding while utilizing only two mechanical units for handling larger or more robust weeds.

In a specific embodiment, the one or more laser-weeding units are at a front side of the vehicle, while the one or ore mechanical weeding modules are at a rear side of the vehicle. So, during driving, laser-weeding occurs first, rapidly eliminating most small weeds, while the one or more mechanical weeding modules follow to remove any remaining weeds that are either too large, deeply rooted, or better suited for mechanical extraction.

The weeding modules of the weed control system may be combined on a single common carrier, e.g., a wheeled carrier. Alternatively, both modules can be carried out as a fully standalone unit, e.g., separate wheeled carriers dedicated either to mechanical or laser weeding. Both units can be provided with their own imaging module and/or data processing module. A communication module, e.g., a wireless communication module to coordinate weeding actions, so as to optimize weeding efficiency.

In an embodiment, the laser weeding module and the mechanical weeding module are mounted to a lower side of a vehicle body.

The vehicle can for example be or comprise a wheeled vehicle, e.g., an autonomous vehicle with a motor drive or it can be a trailer pulled by a towing vehicle such as a tractor, e.g., by means of a three-point hitch system.

The invention is further explained with reference to the accompanying drawing showing an exemplary embodiment.

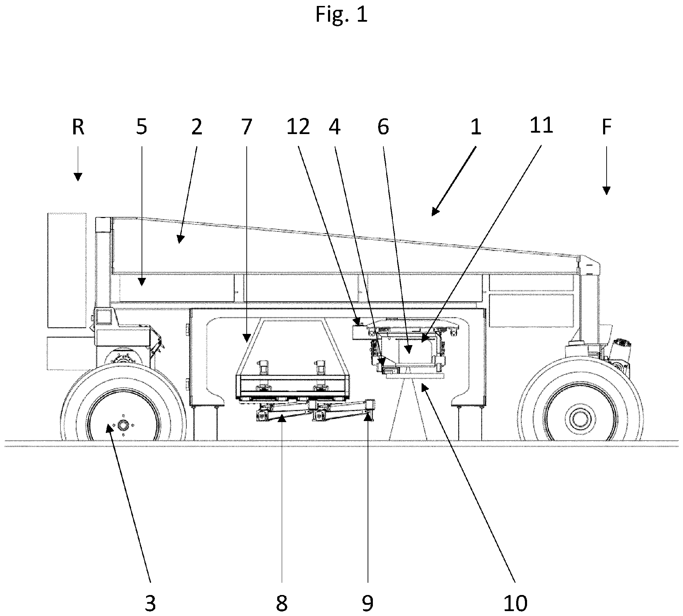

Figure 1 shows a weed control vehicle 1 comprising a vehicle body 2 on wheels 3. The vehicle 1 has a front side F and a rear side R. The vehicle 1 further comprises an imaging module 4, a data processing module 5, a laser weeding module 6, and a mechanical weeding module 7. The data processing module 5 is placed in an enclosure of the vehicle body 2 together with a power module and further utilities (not shown). The imaging module 4, laser weeding module 6 and the mechanical weeding module 7 are suspended from a bottom side of the vehicle body 2 between the wheels 3, at a distance above the ground surface.

In the shown exemplary embodiment, the mechanical weeding module 7 comprises movable arms 8 and an end effector 9, in this embodiment a drill, at an outer end of the movable arms 8. The arms 8 are movable horizontally as well as vertically to allow accurate targeting of the end effector 9.

The laser weeding module 6 comprises a downward directed laser head 10 on a 2D galvanometer steering unit 11 and a laser compensation module 12 to compensate for movement in vertical direction, e.g., to keep the laser beam in the Rayleigh range.

In the shown embodiment, the imaging module 4 is a downward stereoscopic camera mounted to a lower side of the laser weeding module 6. The imaging module 4 has a field of view that completely overlaps the working range of the laser beam.

When the weed control vehicle 1 moves over a crop field, the imaging module 12 generates three dimensional image data. The data processing module 5 is configured to receive the three-dimensional image data of a weed plant to determine position data and identification data of the weed plant. The identification data can be used to determine the amount of energy needed by the laser weeding module 6 to eliminate the weed plant. The data processing module 5 includes a control unit (not shown) programmed to activate the laser weeding module 6 if the determined amount of energy is below an upper limit. If the energy data is at or above the upper limit, the mechanical weeding unit 7 is activated instead of the laser weeding unit 6.

It is noted that the drawings are schematic, not necessarily to scale and that details that are not required for understanding the present invention may have been omitted. The terms "upward", "downward", "below", "above", and the like relate to the embodiment as oriented in the drawings, unless otherwise specified.

The disclosure is not restricted to the shown embodiments which can be varied in a number of ways within the scope of the claims.

## Claims

1. Weed control vehicle, comprising
- an imaging module;
- a laser weeding module, and
- a data processing module in communication with the imaging module to receive image data of a detected weed plant, the data processing module being programmed to determine position data and identification data of the detected weed plant on basis of the image data;
wherein the weed control vehicle further comprises a mechanical weeding module;
wherein in a selection step the data processing module is programmed to select the laser weeding module or the mechanical weeding module for weeding the detected weed plant on basis of the position data and/or identification data of the detected weed plant.

2. Weed control vehicle according to claim 1, wherein in the selection step the data processing module is programmed to calculate the amount of energy needed by the laser weeding module to eliminate the detected weed plant on basis of the identification data of the detected weed plant;
wherein the data processing module is programmed to select the laser weeding module if the amount of energy is below an upper limit;
and wherein the data processing module is programmed to activate the mechanical weeding module if the amount of energy is above the upper limit.

3. Weed control vehicle according to claim 2, wherein the data processing module is programmed to activate the mechanical weeding module if the amount of energy that would be needed by the laser weeding module is above 50 Joule, e.g., above 40 Joules for weed plants having a height of at most 50 mm, or above 20 Joules for weed plants having a height of at most 30 mm.

4. Weed control vehicle according to any one of the preceding claims, wherein in the selection step, the identification data used in the selection step for selecting the laser weeding module or the mechanical weeding module include height, diameter, species and/or stem thickness of the detected weed plant, optionally in combination with temperature data and/or humidity data.

5. Weed control vehicle according to any one of the preceding claims, wherein the data processing module is programmed to activate the mechanical weeding module if the length of a detected weed plant is above predefined upper limit, e.g., 50 mm and/or if the distance between the detected weed plant and a closest crop plant is less than a lower limit.

6. Weed control vehicle according to any one of the preceding claims, wherein the laser weeding module and the mechanical weeding module are mounted to a lower side of a vehicle body.

7. Weed control vehicle according to any one of the preceding claims, wherein the laser weeding module and the mechanical weeding module are mounted to separate carriers.

8. Weed control vehicle according to any one of the preceding claims, wherein the imaging module is or comprises a stereoscopic imaging device, such as a stereoscopic camera, and the image data are three-dimensional image data.

9. Weed control vehicle according to any one of the preceding claims, wherein the image module comprises a combination of a camera with one ore more depth sensors, such as a LIDAR sensor, and the data processing module is programmed to generate three-dimensional image data used for determining the position data and identification data.
